# EUROPEAN PATENT APPLICATION

(11) **EP 3 981 596 A1**
(43) Date of publication of application: **13.04.2022**
(21) Application number: 20818355.8
(22) Date of filing: 05.06.2020
(51) Int. Cl.: B32B 27/10, B32B 27/40, C09D 5/02, C08L 75/00, C09D 175/04, C08G 18/00, C08G 18/10, C08G 18/75, C08G 18/76, C08K 3/013, C09D 7/43, C09D 7/61

(54) **COATING AGENT AND LAYERED BODY**

(30) Priority: 07.06.2019 JP 2019107229
(71) Applicant: Mitsui Chemicals, Inc., Tokyo 105-7122 (JP)
(72) Inventor: FUKUDA, Kazuyuki, Sodegaura-shi, Chiba 299-0265 (JP); MIYANAGA, Tomoharu, Sodegaura-shi, Chiba 299-0265 (JP); KOUDA, Chikako, Sodegaura-shi, Chiba 299-0265 (JP); UCHIDA, Takashi, Tokyo 105-7122 (JP); KUSUMOTO, Masaya, Sodegaura-shi, Chiba 299-0265 (JP)
(74) Representative: Hoffmann Eitle
(86) International application number: PCT/JP2020/022348
(87) International publication number: WO 2020/246593

(57) **Abstract**

In a coating agent obtained by water-dispersing a polyurethane resin, the polyurethane resin is a secondary reaction product of an isocyanate group-terminated prepolymer and a chain extender. The isocyanate group-terminated prepolymer is a primary reaction product of a polyisocyanate component containing a xylylene diisocyanate and/or a hydrogenated xylylene diisocyanate, and an active hydrogen group-containing component containing a short chain diol having 2 to 6 carbon atoms and an active hydrogen compound having a hydrophilic group; and the viscosity at 25°C of the coating agent is 50 mPa·s or more.

## Description

### TECHNICAL FIELD

The present invention relates to a coating agent and a laminate, specifically, to a coating agent containing a polyurethane resin having gas barrier properties and a laminate including a polyurethane layer having gas barrier properties.

### BACKGROUND ART

Conventionally, in order to impart gas barrier properties to a paper substrate, it has been proposed that a mixture of a first polyurethane dispersion and a layered inorganic compound is applied to the paper substrate and dried to laminate a first layer (first polyurethane layer), and furthermore, a mixture of a second polyurethane dispersion and a layered inorganic compound, or the second polyurethane dispersion is applied to the first layer and dried to laminate a second layer (second polyurethane layer) (ref: for example, Patent Document 1).

In such a laminate, since the first polyurethane dispersion and the second polyurethane dispersion are sequentially applied, it is possible to excellently laminate a polyurethane layer having gas barrier properties on the paper substrate through which moisture easily permeates.

### Citation List

### Patent Document

Patent Document 1: Japanese Unexamined Patent Publication No. 2015-104831

### SUMMARY OF THE INVENTION

### PROBLEM TO BE SOLVED BY THE INVENTION

On the other hand, when the two polyurethane layers are laminated on the paper substrate, since a relatively large amount of polyurethane resin is included in the obtained laminate, it is unsuitable for recycling.

However, when the polyurethane layer is reduced to one, since moisture permeates through the paper substrate, there may be a case where the polyurethane layer is not sufficiently laminated, and the gas barrier properties are lowered.

The present invention provides a coating agent capable of excellently laminating a polyurethane layer with respect to a paper substrate, and a laminate obtained by using the coating agent.

### MEANS FOR SOLVING THE PROBLEM

The present invention [1] includes a coating agent obtained by water-dispersing a polyurethane resin and a thickener, wherein the polyurethane resin is a secondary reaction product of an isocyanate group-terminated prepolymer and a chain extender, the isocyanate group-terminated prepolymer being a primary reaction product of a polyisocyanate component containing a xylylene diisocyanate and/or a hydrogenated xylylene diisocyanate, and an active hydrogen group-containing component containing a short chain diol having 2 to 6 carbon atoms and an active hydrogen compound having a hydrophilic group; and a content ratio of the thickener is 0.1% by mass or more and 20% by mass or less with respect to the total solid content of the polyurethane resin and the thickener.

The present invention [2] includes a coating agent obtained by water-dispersing a polyurethane resin, wherein the polyurethane resin is a secondary reaction product of an isocyanate group-terminated prepolymer and a chain extender, the isocyanate group-terminated prepolymer being a primary reaction product of a polyisocyanate component containing a xylylene diisocyanate and/or a hydrogenated xylylene diisocyanate, and an active hydrogen group-containing component containing a short chain diol having 2 to 6 carbon atoms and an active hydrogen compound having a hydrophilic group; and the viscosity at 25°C of the coating agent is 50 mPa·s or more.

The present invention [3] includes the coating agent described in the above-described [1] or [2] further including a swellable layered inorganic compound.

The present invention [4] includes a laminate including a substrate made of paper and a polyurethane layer laminated on at least one surface of the substrate, wherein the polyurethane layer includes a dried product of the coating agent described in any one of claims [1] to [3].

The present invention [5] includes the laminate described in the above-described [4] further including an ionomer layer.

### EFFECT OF THE INVENTION

Since the coating agent of the present invention has relatively high viscosity, it can be excellently applied to a paper substrate through which moisture easily permeates, and a polyurethane layer can be formed.

In addition, in the laminate of the present invention, a polyurethane layer having gas barrier properties is excellently laminated on the paper substrate. Therefore, the laminate of the present invention has excellent gas barrier properties.

### BRIEF DESCRIPTION OF THE DRAWINGS

FIG. 1 shows a schematic configuration view for illustrating one embodiment of a laminate of the present invention.
FIG. 2 shows a schematic configuration view for illustrating another embodiment of a laminate of the present invention.

### DESCRIPTION OF EMBODIMENTS

A coating agent of the present invention is a resin composition (paper coating agent) for being applied to a paper substrate 2 (described later) in a laminate 1 to be described later.

The coating agent is a dispersion liquid (dispersion) containing a polyurethane resin having gas barrier properties (described later), and is, for example, obtained by water-dispersing the polyurethane resin (and a thickener (described later) to be added if necessary), or by adding the thickener after water-dispersing the polyurethane resin.

In the polyurethane dispersion (PUD), the polyurethane resin is obtained by a reaction of an isocyanate group-terminated prepolymer with a chain extender. Further, the isocyanate group-terminated prepolymer is obtained by a reaction of a polyisocyanate component with an active hydrogen group-containing component. In other words, the isocyanate group-terminated prepolymer is a primary reaction product of a polyisocyanate component and an active hydrogen group-containing component, and the polyurethane resin is a secondary reaction product of an isocyanate group-terminated prepolymer and a chain extender. Such a polyurethane resin has gas barrier properties. The gas barrier properties show properties of lowering the transmittance of oxygen.

The polyisocyanate component contains, as an essential component, a xylylene diisocyanate and/or a hydrogenated xylylene diisocyanate.

Examples of the xylylene diisocyanate (XDI) include 1,2-xylylene diisocyanates (o-XDI), 1,3-xylylene diisocyanates (m-XDI), and 1,4-xylylene diisocyanates (p-XDI) as a structural isomer.

These xylylene diisocyanates may be used alone or in combination of two or more. As the xylylene diisocyanate, preferably, a 1,3-xylylene diisocyanate and a 1,4-xylylene diisocyanate are used, more preferably, a 1,3-xylylene diisocyanate is used.

Examples of the hydrogenated xylylene diisocyanate (also known as bis(isocyanatomethyl)cyclohexane) (H₆XDI) include 1,2-hydrogenated xylylene diisocyanate (1,2-bis(isocyanatomethyl)cyclohexane, 1,2-H₆XDI), 1,3-hydrogenated xylylene diisocyanate (1,3-bis(isocyanatomethyl)cyclohexane, 1,3-H₆XDI), and 1,4-hydrogenated xylylene diisocyanate (1,4-bis(isocyanatomethyl)cyclohexane, 1,4-H₆XDI) as a structural isomer.

These hydrogenated xylylene diisocyanates may be used alone or in combination of two or more. As the hydrogenated xylylene diisocyanate, preferably, a 1,3-hydrogenated xylylene diisocyanate and a 1,4-hydrogenated xylylene diisocyanate are used, more preferably, a 1,3-hydrogenated xylylene diisocyanate is used.

Also, examples of the xylylene diisocyanate and/or the hydrogenated xylylene diisocyanate include derivatives of these.

Examples of the derivative of the xylylene diisocyanate and/or the hydrogenated xylylene diisocyanate include multimers (for example, dimers, trimers (for example, isocyanurate modified products and iminooxadiazinedione modified products), pentamers, heptamers, and the like) of the xylylene diisocyanate and/or the hydrogenated xylylene diisocyanate; allophanate modified products (for example, allophanate modified products generated by a reaction of a xylylene diisocyanate and/or a hydrogenated xylylene diisocyanate with a known monohydric alcohol and/or a known dihydric alcohol and the like); polyol modified products (for example, polyol modified products ((alcohol adducts) generated by a reaction of a xylylene diisocyanate and/or a hydrogenated xylylene diisocyanate with a known trihydric or more alcohol and the like); biuret-modified products (for example, biuret modified products generated by a reaction of a xylylene diisocyanate and/or a hydrogenated xylylene diisocyanate with water or amines and the like); urea modified products (for example, urea modified products generated by a reaction of a xylylene diisocyanate and/or a hydrogenated xylylene diisocyanate with a diamine and the like); oxadiazine trione modified products (for example, oxadiazine trione generated by a reaction of a xylylene diisocyanate and/or a hydrogenated xylylene diisocyanate with a carbon dioxide gas and the like); carbodiimide modified products (carbodiimide modified products generated by a decarboxylation condensation reaction of a xylylene diisocyanate and/or a hydrogenated xylylene diisocyanate and the like); urethodione modified products; and uretonimine modified products.

These derivatives may be used alone or in combination of two or more.

Further, the polyisocyanate component may also contain another polyisocyanate (polyisocyanate excluding the xylylene diisocyanate and the hydrogenated xylylene diisocyanate) if necessary.

Examples of the other polyisocyanate include polyisocyanates such as an aromatic polyisocyanate, an araliphatic polyisocyanate (excluding the xylylene diisocyanate), an aliphatic polyisocyanate, and an alicyclic polyisocyanate (excluding the hydrogenated xylylene diisocyanate).

Examples of the aromatic polyisocyanate include aromatic diisocyanates such as tolylene diisocyanate (2,4- or 2,6-tolylene diisocyanate or a mixture thereof) (TDI), phenylene diisocyanate (m-, p-phenylene diisocyanate or a mixture thereof), 4,4'-diphenyl diisocyanate, 1,5-naphthalene diisocyanate (NDI), diphenylmethane diisocyanate (4,4'-, 2,4'-, or 2,2'-diphenylmethane diisocyanate or a mixture thereof) (MDI), 4,4'-toluidine diisocyanate (TODI), and 4,4'-diphenylether diisocyanate.

Examples of the araliphatic polyisocyanate (excluding the xylylene diisocyanate) include araliphatic diisocyanates such as tetramethylxylylene diisocyanate (1,3- or 1,4-tetramethylxylylene diisocyanate or a mixture thereof) (TMXDI) and ω,ω'-diisocyanate-1,4-diethylbenzene.

Examples of the aliphatic polyisocyanate include aliphatic diisocyanates such as trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), 1,5-pentamethylene diisocyanate (PDI), 1,6-hexamethylene diisocyanate (also known as hexamethylene diisocyanate) (HDI), 2,4,4- or 2,2,4-trimethylhexamethylene diisocyanate, and 2,6-diisocyanate methylcaproate.

Examples of the alicyclic polyisocyanate (excluding the hydrogenated xylylene diisocyanate) include alicyclic diisocyanates such as 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (also known as isophorone diisocyanate) (IPDI), methylenebis(cyclohexyl isocyanate) (also known as bis(isocyanatohexyl)methane) (4,4'-, 2,4'-, or 2,2'-methylenebis(cyclohexyl isocyanate), trans-trans isomer, trans-cis isomer, and cis-cis isomer, or a mixture thereof) (H₁₂MDI), methylcyclohexane diisocyanate (methyl-2,4-cyclohexane diisocyanate, methyl-2,6-cyclohexane diisocyante), and norbornane diisocyanate (various isomers or a mixture thereof) (NBDI). Preferably, a 4,4'-methylenebis(cyclohexyl isocyanate) is used.

The other polyisocyanate includes the derivative of the same kind as the description above.

These other polyisocyanates may be used alone or in combination of two or more. Preferably, an araliphatic polyisocyanate and an alicyclic polyisocyanate are used, more preferably, an alicyclic polyisocyanate is used, further more preferably, a methylenebis(cyclohexyl isocyanate) (H₁₂MDI) is used.

When the other polyisocyanate (polyisocyanate excluding the xylylene diisocyanate and the hydrogenated xylylene diisocyanate) is blended, a content ratio of the xylylene diisocyanate and the hydrogenated xylylene diisocyanate (total amount of these when used in combination) is, for example, 50% by mass or more, preferably 60% by mass or more, more preferably 80% by mass or more, and for example, 99% by mass or less with respect to the total amount of the polyisocyanate component.

Also, as the polyisocyanate component, preferably, a xylylene diisocyanate (XDI) and a bis(isocyanatocyclohexyl)methane (H₁₂MDI) are used in combination, or a hydrogenated xylylene diisocyanate (H₆XDI) is used alone, more preferably, a xylylene diisocyanate (XDI) and a bis(isocyanatocyclohexyl)methane (H₁₂MDI) are used in combination.

By using the xylylene diisocyanate (XDI) and the bis(isocyanatocyclohexyl)methane (H₁₂MDI) in combination or by using the hydrogenated xylylene diisocyanate (H₆XDI) alone, a coating agent having excellent water dispersibility and having a small average particle size is obtained without damaging the gas barrier properties.

When the xylylene diisocyanate and the bis(isocyanatocyclohexyl)methane are used in combination, a ratio of the xylylene diisocyanate (XDI) is, for example, 60 parts by mass or more, preferably 70 parts by mass or more, more preferably 80 parts by mass or more, and for example, 95 parts by mass or less, preferably 93 parts by mass or less, more preferably 90 parts by mass or less with respect to 100 parts by mass of the total amount of the xylylene diisocyanate (XDI) and the bis(isocyanatocyclohexyl)methane (H₁₂MDI). Further, a ratio of the bis(isocyanatocyclohexyl)methane (H₁₂MDI) is, for example, 5 parts by mass or more, preferably 7 parts by mass or more, more preferably 10 parts by mass or more, and for example, 40 parts by mass or less, preferably 30 parts by mass or less, more preferably 20 parts by mass or less.

An example of the active hydrogen group-containing component includes a polyol component. The polyol component contains, as an essential component, a diol having 2 to 6 carbon atoms and an active hydrogen group-containing compound having a hydrophilic group.

A short chain diol having 2 to 6 carbon atoms is an organic compound having 50 or more and 650 or less of a molecular weight (in the case of having a molecular weight distribution, a number average molecular weight in terms of polystyrene by GPC measurement) and having 2 to 6 carbon atoms having two hydroxyl groups, and specifically, examples thereof include alkanediols having 2 to 6 carbon atoms (alkylene glycols having 2 to 6 carbon atoms) such as ethylene glycol, propylene glycol, 1,3-propane diol, 1,4-butylene glycol, 1,3-butylene glycol, 1,2-butylene glycol, 1,5-pentanediol, 1,6-hexanediol, neopentyl glycol, 3-methyl-1,5-pentanediol, and 1,3- or 1,4-cyclohexanediol; ether diols having 2 to 6 carbon atoms such as diethylene glycol, triethylene glycol, and dipropylene glycol; and alkenediols having 2 to 6 carbon atoms such as 1,4-dihydroxy-2-butene.

These short chain diols having 2 to 6 carbon atoms may be used alone or in combination of two or more.

As the short chain diol having 2 to 6 carbon atoms, from the viewpoint of gas barrier properties, preferably, an alkanediol having 2 to 6 carbon atoms is used, more preferably, an ethylene glycol is used.

A mixing ratio of the short chain diol having 2 to 6 carbon atoms is, for example, 10 parts by mass or more, preferably 30 parts by mass or more, more preferably 50 parts by mass or more, and for example, 90 parts by mass or less, preferably 80 parts by mass or less, more preferably 70 parts by mass or less with respect to 100 parts by mass of the total amount of the polyol component.

The active hydrogen group-containing compound having a hydrophilic group is a compound having a hydrophilic group such as a nonionic group or an ionic group, and further having an active hydrogen group such as a hydroxyl group and an amino group.

Specifically, examples of the active hydrogen group-containing compound having a hydrophilic group include an active hydrogen group-containing compound having a nonionic group and an active hydrogen group-containing compound having an ionic group.

Examples of the active hydrogen group-containing compound having a nonionic group include polyoxyethylene glycol, a one end-capped polyoxyethylene glycol, and a polyoxyethylene side chain-containing polyol.

Examples of the active hydrogen group-containing compound having an ionic group include an active hydrogen group-containing compound having an anionic group (described later) and two or more active hydrogen groups in combination, and an active hydrogen group-containing compound having a cationic group (quaternary ammonium and the like) and two or more active hydrogen groups in combination.

As the active hydrogen group-containing compound having an ionic group, preferably, an active hydrogen group-containing compound having an anionic group is used.

In the active hydrogen group-containing compound having an anionic group, examples of the anionic group include a carboxy group (carboxylic acid group) and a sulfo group (sulfonic acid group), and from the viewpoint of gas barrier properties and water resistance, preferably, a carboxy group is used.

Further, examples of the active hydrogen group include a hydroxyl group and an amino group, and preferably, a hydroxyl group is used.

In other words, as the active hydrogen group-containing compound having an anionic group, preferably, an organic compound having a carboxy group and two hydroxyl groups in combination is used.

An example of the organic compound having a carboxy group and two hydroxyl groups in combination includes a carboxy group-containing polyol, and more specifically, examples thereof include polyhydroxyalkanoic acids such as 2,2-dimethylolacetic acid, 2,2-dimethylollactic acid, 2,2-dimethylolpropionic acid (also known as dimethylolpropionic acid), 2,2-dimethylolbutanoic acid, 2,2-dimethylolbutyric acid, and 2,2-dimethylolvaleric acid. These may be used alone or in combination of two or more. As the carboxy group-containing polyol, preferably, a 2,2-dimethylolpropionic acid is used.

These active hydrogen group-containing compounds having an anionic group may be used alone or in combination of two or more.

As the active hydrogen group-containing compound having an anionic group, preferably, a carboxy group-containing polyol is used, more preferably, a polyhydroxyalkanoic acid is used, further more preferably, dimethylolpropionic acid is used.

These active hydrogen group-containing compounds having a hydrophilic group may be used alone or in combination of two or more.

A mixing ratio of the active hydrogen group-containing compound having a hydrophilic group is, for example, 10 parts by mass or more, preferably 20 parts by mass or more, and for example, 50 parts by mass or less, preferably 40 parts by mass or less with respect to 100 parts by mass of the total amount of the polyol component.

Also, the polyol component may furthermore contain, as an optional component, another low molecular weight polyol (low molecular weight polyol excluding a diol having 2 to 6 carbon atoms and an active hydrogen group-containing compound having a hydrophilic group) and a high molecular weight polyol.

The polyol component preferably does not contain a high molecular weight polyol from the viewpoint of gas barrier properties.

The high molecular weight polyol is a compound having a molecular weight (number average molecular weight) of above 650 and having two or more hydroxyl groups, and examples thereof include high molecular weight macropolyols having a molecular weight of above 650 such as a polyether polyol (for example, a polyoxyalkylene (2 to 3 carbon atoms) polyol, a polytetramethylene ether polyol, and the like), a polyester polyol (for example, an adipic acid-based polyester polyol, a phthalic acid-based polyester polyol, a lactone-based polyester polyol, and the like), a polycarbonate polyol, a polyurethane polyol (for example, a polyol obtained by urethane-modifying a polyether polyol, a polyester polyol, a polycarbonate polyol, and the like by a polyisocyanate), an epoxy polyol, a vegetable oil polyol, a polyolefin polyol, an acrylic polyol, and a vinyl monomer-modified polyol.

The high molecular weight polyol may cause a reduction in the gas barrier properties.

Therefore, the polyol component does not contain the high molecular weight polyol. Thus, it is possible to improve the gas barrier properties of the polyurethane resin (described later).

On the other hand, the polyol component may contain, as an optional component, a low molecular weight polyol having a molecular weight of 50 or more and 650 or less (excluding the above-described short chain diol having 2 to 6 carbon atoms) (hereinafter, referred to as another low molecular weight polyol).

Examples of the other low molecular weight polyol include a diol having 7 or more carbon atoms and a trihydric or more low molecular weight polyol.

Examples of the diol having 7 or more carbon atoms include dihydric alcohols (diols) having 7 or more carbon atoms such as alkane-1,2-diol having 7 to 20 carbon atoms, 2,6-dimethyl-1-octene-3,8-diol, 1,3- or 1,4-cyclohexanedimethanol and a mixture thereof, hydrogenated bisphenol A, and bisphenol A.

These diols having 7 or more carbon atoms may be used alone or in combination of two or more.

The trihydric or more low molecular weight polyol is an organic compound having a molecular weight of 650 or less and having three or more hydroxyl groups in one molecule, and examples thereof include trihydric alcohols (low molecular weight triols) such as glycerine, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol; tetrahydric alcohols such as tetramethylolmethane (pentaerythritol) and diglycerine; pentahydric alcohols such as xylitol; hexahydric alcohols such as sorbitol, mannitol, allitol, iditol, dulcitol, altritol, inositol, and dipentaerythritol; heptahydric alcohols such as perseitol; and octahydric alcohols such as sucrose.

These trihydric or more low molecular weight polyols may be used alone or in combination of two or more.

Further, when the number average molecular weight is 650 or less, the above-described macropolyols (specifically, for example, the low molecular weight macropolyols having a molecular weight of 650 or less such as a polyether polyol (for example, a polyoxyalkylene polyol, a polytetramethylene ether polyol, and the like), a polyester polyol (for example, an adipic acid-based polyester polyol, a phthalic acid-based polyester polyol, a lactone-based polyester polyol, and the like), a polycarbonate polyol, a polyurethane polyol (for example, a polyol obtained by urethane-modifying the polyether polyol, the polyester polyol, the polycarbonate polyol, and the like by the polyisocyanate), an epoxy polyol, a vegetable oil polyol, a polyolefin polyol, an acrylic polyol, and a vinyl monomer-modified polyol) can be used as the other low molecular weight polyol.

These other low molecular weight polyols may be used alone or in combination of two or more.

As the other low molecular weight polyol, from the viewpoint of water resistance and water dispersion stability, preferably, a trihydric or more low molecular weight polyol is used, more preferably, a trihydric alcohol and a tetrahydric alcohol are used, further more preferably, a trihydric alcohol is used, particularly preferably, a trimethylolpropane is used.

When the other low molecular weight polyol is blended, a mixing ratio thereof is, for example, 0.2 parts by mass or more, preferably 1 part by mass or more, more preferably 2 parts by mass or more, and for example, 20 parts by mass or less, preferably 10 parts by mass or less, more preferably 8 parts by mass or less with respect to 100 parts by mass of the total amount of the polyol component.

Further, as a combination ratio of the short chain diol having 2 to 6 carbon atoms and the other low molecular weight polyol, a ratio of the other low molecular weight polyol is, for example, 2 parts by mass or more, preferably 5 parts by mass or more, and for example, 20 parts by mass or less, preferably 15 parts by mass or less, more preferably 10 parts by mass or less with respect to 100 parts by mass of the total amount of these.

Further, a ratio of the active hydrogen group-containing compound having a hydrophilic group is, for example, 10 parts by mass or more, preferably 20 parts by mass or more, more preferably 40 parts by mass or more, and for example, 90 parts by mass or less, preferably 80 parts by mass or less, more preferably 70 parts by mass or less with respect to 100 parts by mass of the total amount of the short chain diol having 2 to 6 carbon atoms and the other low molecular weight polyol.

When the content ratio of the other low molecular weight polyol is within the above-described range, it is possible to ensure excellent dispersibility. Therefore, it is possible to excellently form a polyurethane layer having excellent water resistance and gas barrier properties.

The polyol component preferably consists of a short chain diol having 2 to 6 carbon atoms, a trihydric or more low molecular weight polyol, and an active hydrogen group-containing compound having a hydrophilic group, or consists of a short chain diol having 2 to 6 carbon atoms, and an active hydrogen group-containing compound having a hydrophilic group.

The polyol component more preferably consists of a short chain diol having 2 to 6 carbon atoms, a trihydric or more low molecular weight polyol, and an active hydrogen group-containing compound having an anionic group, or consists of a short chain diol having 2 to 6 carbon atoms, and an active hydrogen group-containing compound having an anionic group.

Then, in order to synthesize the isocyanate group-terminated prepolymer, each of the above-described components is blended at a ratio of above 1, preferably a ratio of 1.1 to 10 in an equivalent ratio (isocyanate group/ active hydrogen group) of an isocyanate group to an active hydrogen group (hydroxyl group). Then, each of the above-described components is reacted by a known polymerization method such as bulk polymerization or solution polymerization, preferably by solution polymerization in which the reactivity and the viscosity are more easily adjusted.

In the bulk polymerization, for example, the above-described components are blended under a nitrogen atmosphere to be reacted at a reaction temperature of 75 to 85°C for about 1 to 20 hours.

In the solution polymerization, for example, the above-described components are blended into an organic solvent (solvent) under a nitrogen atmosphere to be reacted at a reaction temperature of 20 to 80°C for about 1 to 20 hours.

Examples of the organic solvent include acetone, methyl ethyl ketone, ethyl acetate, tetrahydrofuran, and acetonitrile which are inert to an isocyanate group and rich in hydrophilicity.

In the polymerization reaction, the reaction is carried out until the isocyanate group content in the reaction solution becomes the following isocyanate group concentration.

In addition, in the above-described polymerization, for example, a reaction catalyst such as amine-type, tin-type, and lead-type may be added if necessary, and an unreacted polyisocyanate may be also, for example, removed from the obtained isocyanate group-terminated prepolymer by a known method such as distillation and extraction.

The isocyanate group-terminated prepolymer thus obtained is a polyurethane prepolymer having two or more free isocyanate groups at its molecular terminal, and has relatively high isocyanate group concentration (isocyanate group content in terms of solid content excluding a solvent). More specifically, the isocyanate group concentration is, for example, 4% by mass or more, preferably 5% by mass or more, more preferably 6% by mass or more, and for example, 25% by mass or less, preferably 20% by mass or less, more preferably 17% by mass or less, further more preferably 15% by mass or less.

Further, an average functionality of the isocyanate group is, for example, 1.5 or more, preferably 1.9 or more, more preferably 2.0 or more, and for example, 3.0 or less, preferably 2.5 or less.

When the average functionality of the isocyanate group is within the above-described range, it is possible to obtain a stable polyurethane dispersion, and to ensure excellent adhesive properties and gas barrier properties.

Further, a number average molecular weight (molecular weight in terms of polystyrene by GPC measurement) thereof is, for example, 500 or more, preferably 800 or more, and for example, 100000 or less, preferably 50000 or less.

Further, for example, when the anionic group is contained in the isocyanate group-terminated prepolymer, a neutralizing agent is preferably added to the isocyanate group-terminated prepolymer to be neutralized, thereby forming a salt of an anionic group.

An example of the neutralizing agent includes a conventional base, and examples thereof include an organic base and an inorganic base.

Examples of the organic base include tertiary amines such as trialkylamines (for example, trialkylamines having 1 to 4 carbon atoms such as trimethylamine and triethylamine) and alkanolamines (for example, dimethylethanolamine, methyldiethanolamine, triethanolamine, triisopropanolamine, and the like), and secondary amines such as heterocyclic amines (morpholine and the like).

Examples of the inorganic base include ammonia, alkali metal hydroxides (for example, lithium hydroxide, sodium hydroxide, potassium hydroxide, and the like), alkaline earth metal hydroxides (for example, magnesium hydroxide, calcium hydroxide, and the like), and alkali metal carbonates (for example, sodium carbonate, potassium carbonate, and the like).

These neutralizing agents may be used alone or in combination of two or more.

As the neutralizing agent, preferably, an organic base is used, more preferably, a tertiary amine is used, further more preferably, a trialkylamine is used, particularly preferably, a triethylamine is used.

An addition amount of the neutralizing agent is, for example, 0.4 equivalents or more, preferably 0.6 equivalents or more, and for example, 1.2 equivalents or less, preferably 1.0 equivalent or less with respect to 1 equivalent of the anionic group (preferably, the carboxy group).

Then, in this method, an isocyanate group-terminated prepolymer (primary reaction product) neutralized by the above-described neutralizing agent and a chain extender are reacted to obtain a polyurethane resin (secondary reaction product).

Preferably, the isocyanate group-terminated prepolymer and the chain extender are reacted in water to obtain a polyurethane dispersion obtained by water-dispersing a polyurethane resin.

The chain extender is an organic compound having a plurality of active hydrogen groups for chain extension reaction of an isocyanate group-terminated prepolymer, and examples thereof include polyamine compounds such as an aromatic polyamine, an araliphatic polyamine, an alicyclic polyamine, an aliphatic polyamine, and a polyoxyethylene group-containing polyamine, and amino alcohols.

Examples of the aromatic polyamine include 4,4'-diphenylmethanediamine and tolylenediamine.

Examples of the araliphatic polyamine include 1,3- or 1,4-xylylenediamine and a mixture thereof.

Examples of the alicyclic polyamine include 3-aminomethyl-3,5,5-trimethylcyclohexylamine (also known as isophoronediamine), 4,4' -dicyclohexylmethanediamine, 2,5(2,6)-bis(aminomethyl)bicyclo[2.2.1]heptane, 1,4-cyclohexanediamine, 1-amino-3-aminomethyl-3,5,5-trimethylcyclohexane, bis-(4-aminocyclohexyl)methane, diaminocyclohexane, 3,9-bis(3-aminopropyl)-2,4,8,10-tetraoxaspiro[5,5]undecane, and 1,3- and 1,4-bis(aminomethyl)cyclohexane, and a mixture of these.

Examples of the aliphatic polyamine include ethylenediamine, propylenediamine, 1,3-propanediamine, 1,4-butanediamine, 1,5-pentanediamine, 1,6-hexamethylenediamine, hydrazine (including hydrate), diethylenetriamine, triethylenetetramine, tetraethylenepentamine, 1,2-diaminoethane, 1,2-diaminopropane, and 1,3-diaminopentane.

Examples of the polyoxyethylene group-containing polyamine include polyoxyalkylene ether diamines such as polyoxyethylene ether diamine. More specifically, examples thereof include PEG#1000 diamine manufactured by NOF CORPORATION and JEFFAMINE ED-2003, EDR-148, and XTJ-512 manufactured by Huntsman Corporation.

Examples of the amino alcohol include 2-((2-aminoethyl)amino)ethanol (also known as N-(2-aminoethyl)ethanolamine) and 2-((2-aminoethyl)amino)-1-methylpropanol (also known as N-(2-aminoethyl)isopropanolamine).

Further, an example of the chain extender includes an alkoxysilyl compound having a primary amino group, or a primary amino group and a secondary amino group.

Examples of the alkoxysilyl compound having a primary amino group, or a primary amino group and a secondary amino group include alkoxysilyl compounds having a primary amino group such as γ-aminopropyltrimethoxysilane, γ-aminopropyltriethoxysilane, and N-phenyl-γ-aminopropyltrimethoxysilane, and alkoxysilyl compounds having a primary amino group and a secondary amino group such as N-P(aminoethyl)y-aminopropyltrimethoxysilane (also known as N-2-(aminoethyl)-3-aminopropyltrimethoxysilane, N-β(aminoethyl)γ-aminopropyltriethoxysilane (also known as N-2-(aminoethyl)-3-aminopropyltriethoxysilane), N-β(aminoethyl)γ-aminopropylmethyldimethoxysilane (also known as N-2-(aminoethyl)-3-aminopropylmethyldimethoxysilane), and N-β(aminoethyl)γ-aminopropylmethyldiethoxysilane (also known as N-2-(aminoethyl)-3-aminopropylmethyldiethoxysilane).

These chain extenders may be used alone or in combination of two or more.

As the chain extender, preferably, an amino alcohol is used, more preferably, a 2-((2-aminoethyl)amino)ethanol is used.

Then, in order to react the isocyanate group-terminated prepolymer with the chain extender in water, for example, first, the isocyanate group-terminated prepolymer is water-dispersed by adding the isocyanate group-terminated prepolymer to water, and then, the chain extender is added thereto to chain-extend the isocyanate group-terminated prepolymer by the chain extender.

In order to water-disperse the isocyanate group-terminated prepolymer, while water is stirred, the isocyanate group-terminated prepolymer is added at a ratio of 100 to 1000 parts by mass of water with respect to 100 parts by mass of the isocyanate group-terminated prepolymer.

Thereafter, the chain extender is added dropwise to water in which the isocyanate group-terminated prepolymer is water-dispersed under stirring so that an equivalent ratio (active hydrogen group/ isocyanate group) of the active hydrogen group (the amino group and the hydroxyl group) of the chain extender to the isocyanate group of the isocyanate group-terminated prepolymer is, for example, 0.6 to 1.2.

The reaction is completed, for example, at normal temperature, while the chain extender dropped and stirred. The reaction time until the completion of the reaction is, for example, 0.1 hours or more, and for example, 10 hours or less.

In addition, in this method, if necessary, it is possible to remove an organic solvent or water, and furthermore, to adjust the solid content concentration by adding water.

Thus, a dispersion obtained by water-dispersing the polyurethane resin is obtained.

In the polyurethane dispersion, the solid content concentration of the polyurethane resin is, for example, 10% by mass or more, preferably 15% by mass or more, more preferably 20% by mass or more, and for example, 60% by mass or less, preferably 50% by mass or less, more preferably 40% by mass or less.

In addition, in this method, if necessary, it is possible to remove the organic solvent or water, and furthermore, to adjust the solid content concentration by adding water.

A pH of the polyurethane dispersion is, for example, 5 or more, preferably 6 or more, and for example, 11 or less, preferably 10 or less.

An average particle size of the polyurethane dispersion is, for example, 10 nm or more, preferably 20 nm or more, more preferably 50 nm or more, and for example, 500 nm or less, preferably 300 nm or less, more preferably 200 nm or less.

Further, the total sum of the urethane group concentration and the urea group concentration of the polyurethane resin in the polyurethane dispersion is relatively high, and is, for example, 30% by mass or more, preferably 34% by mass or more, more preferably 38% by mass or more, and for example, 50% by mass or less, preferably 46% by mass or less, more preferably 42% by mass or less. By increasing the urethane group concentration and the urea group concentration, it is possible to improve the gas barrier properties.

The total sum of the urethane group concentration and the urea group concentration can be calculated from a charging ratio of raw material components.

The coating agent preferably contains a thickener in addition to the above-described polyurethane resin.

Examples of the thickener include an association-type thickener and a synthetic polymer-type thickener. These may be used alone or in combination of two or more.

As the thickener, preferably, an association-type thickener is used.

An example of the association-type thickener includes a urethane association-type viscosity adjusting agent.

An example of the urethane association-type viscosity adjusting agent includes a compound having a urethane bond and a polyoxyalkylene (2 to 4 carbon atoms) unit in combination in one molecule.

More specifically, an example of the urethane association-type viscosity adjusting agent includes a reaction product of a polyisocyanate and/or a monoisocyanate and a polyether polyol and/or a polyether monool.

Examples of the monoisocyanate include methyl isocyanate, ethyl isocyanate, n-hexyl isocyanate, cyclohexyl isocyanate, 2-ethylhexyl isocyanate, phenyl isocyanate, and benzyl isocyanate. These monoisocyanates may be used alone or in combination of two or more.

Examples of the polyisocyanate include the above-described polyisocyanate, and more specifically, the above-described aromatic polyisocyanate, the above-described araliphatic polyisocyanate (including the xylylene diisocyanate), the above-described aliphatic polyisocyanate, and the above-described alicyclic polyisocyanate (including the hydrogenated xylylene diisocyanate). These polyisocyanates may be used alone or in combination of two or more.

Examples of the polyether polyol include the above-described polyether polyols, and more specifically, a polyoxyalkylene (2 to 3 carbon atoms) polyol, and a polytetramethylene ether polyol. These polyether polyols may be used alone or in combination of two or more.

An example of the polyether monool includes a one end-capped polyoxyalkylene (2 to 3 carbon atoms) glycol. The one end-capped polyoxyalkylene (2 to 3 carbon atoms) glycol is obtained by, for example, capping one end with an alkyl group having 1 to 20 carbon atoms. These polyether monools may be used alone or in combination of two or more.

The polyisocyanate and/or the monoisocyanate, and the polyether polyol and/or the polyether monool react in the presence of a catalyst and/or a solvent, if necessary. The reaction conditions of these may be appropriately set in accordance with the purpose and the application.

The urethane association-type viscosity adjusting agent can be also obtained as a commercially available product.

Examples of the commercially available product of the urethane association-type viscosity adjusting agent include ADEKA NOL UH-420, ADEKA NOL UH-450, ADEKA NOL UH-472, ADEKA NOL UH-462, and ADEKA NOL UH-752 (hereinabove, manufactured by ADEKA CORPORATION); PRIMAL RM-8W, PRIMAL RM-825, PRIMAL RM-2020NPR, PRIMAL RM-12W, and PRIMAL SCT-275 (hereinabove, manufactured by The Dow Chemical Company); and SN thickener 603, SN thickener 607, SN thickener 612, and SN thickener 623N (hereinabove, manufactured by SAN NOPCO LIMITED).

These commercially available products of the thickener may be used alone or in combination of two or more.

Then, the thickener is, for example, added collectively or dividedly to a polyurethane dispersion containing the above-described polyurethane resin.

The thickener may be added as the solid content of 100%, may be added as a solution dissolved in a solvent, or furthermore, may be added as a dispersion liquid dispersed in a solvent.

As described in detail later, an addition amount of the thickener is adjusted so that the coating agent has relatively high viscosity (50 mPa·s or more at 25°C).

Then, after the thickener is added to the polyurethane dispersion, they are mixed by an arbitrary method.

Thus, the coating agent is obtained as a dispersion liquid containing the polyurethane resin and the thickener.

If necessary, another additive (additive excluding the above-described thickener) may be also blended into the coating agent.

Examples of the additive include a silane coupling agent, an alkoxysilane compound, a stabilizer (an antioxidant, a heat stabilizer, an ultraviolet absorber, and the like), a plasticizer, an antistatic agent, a lubricant, an anti-blocking agent, a surfactant, a dispersion stabilizer, a colorant (a pigment, a dye, and the like), a filler, a colloidal silica, inorganic particles, inorganic oxide particles, a crystal nucleating agent, and a cross-linking agent (curing agent). A mixing ratio of the additive is not particularly limited, and is appropriately set in accordance with the purpose and the application.

As an additive, preferably, a filler is used.

Examples of the filler include organic nanofibers and layered inorganic compounds, and from the viewpoint of gas barrier properties, preferably, a layered inorganic compound is used.

Examples of the layered inorganic compound include a swellable layered inorganic compound and a non-swellable layered inorganic compound. From the viewpoint of gas barrier properties, preferably, a swellable layered inorganic compound is used.

The swellable layered inorganic compound is a clay mineral consisting of an ultrathin unit crystal and having properties in which a solvent coordinates or absorbs and swells between unit crystal layers.

Specifically, examples of the swellable layered inorganic compound include hydrous silicates (phyllosilicate minerals and the like), kaolinite-group clay minerals (halloysite, kaolinite, endellite, dickite, nacrite, and the like), antigorite-group clay minerals (antigorite, chrysotile, and the like), smectite-group clay minerals (montmorillonite, beidellite, nontronite, saponite, hectorite, sauconite, stevensite, and the like), vermiculite-group clay minerals (vermiculite and the like), mica or mica-group clay minerals (mica such as platinum mica and gold mica, margarite, tetrasilicic mica, teniolite, and the like), and synthetic mica.

These swellable layered inorganic compounds may be natural clay minerals or may be synthetic clay minerals. Further, these may be used alone or in combination of two or more, and preferably, a smectite-group clay mineral (montmorillonite and the like), a mica-group clay mineral (water-swellable mica and the like), and a synthetic mica are used, more preferably, a synthetic mica is used.

An average particle size of the filler is, for example, 50 nm or more, preferably 100 nm or more, and usually 10 µm or less, for example, 5 µm or less, preferably 3 µm or less. Further, an aspect ratio of the filler is, for example, 50 or more, preferably 100 or more, more preferably 200 or more, and for example, 5000 or less, preferably 3000 or less, more preferably 2000 or less.

The filler may be blended as the solid content of 100% or may be blended as a dispersion liquid dispersed in a solvent.

A mixing ratio of the filler is not particularly limited, and is, for example, 5 parts by mass or more, preferably 10 parts by mass or more, more preferably 30 parts by mass or more, and for example, 70 parts by mass or less, preferably 60 parts by mass or less with respect to 100 parts by mass of the polyurethane resin.

Further, as the additive, preferably, a cross-linking agent (curing agent) is used.

Examples of the cross-linking agent include water-dispersible polyisocyanates, carbodiimides, and epoxy silanes.

The water-dispersible polyisocyanate is a polyisocyanate dispersible in water, and an example thereof includes a polyisocyanate having an alkylene oxide group having 2 to 3 carbon atoms as a repeating unit.

More specifically, examples of the water-dispersible polyisocyanate include water-dispersible blocked polyisocyanates and water-dispersible non-blocked polyisocyanates, and preferably, a water-dispersible non-blocked polyisocyanate is used, more preferably, a water-dispersible non-blocked polyisocyanate having a polyalkylene oxide group is used.

In addition, the water-dispersible polyisocyanate is also available as a commercially available product, and specifically, examples thereof include TAKENATE WD-720, TAKENATE WD-725, TAKENATE WD-220, TAKENATE XWD-HS7, and TAKENATE XWD-HS30 (hereinabove, manufactured by Mitsui Chemicals, Inc,); AQUANATE 100, AQUANATE 110, AQUANATE 200, and AQUANATE 210 (hereinabove, manufactured by Nippon Polyurethane Industry Co., Ltd.); DURANATE WB40-100 and DURANATE WT20-100 (hereinabove, manufactured by Asahi Kasei Chemicals Corporation); Bayhydur 3100 and Bayhydur XP2487/1 (hereinabove, manufactured by Bayer MaterialScience AG); and Basonat HW100 and Basonat HA100 (hereinabove, manufactured by BASF SE).

The carbodiimide is a carbodiimide modified product of the polyisocyanate, and can be obtained as a polycarbodiimide compound, for example, by subjecting the polyisocyanate to a decarboxylation condensation reaction in the presence of a known carbodiimidation catalyst.

More specifically, examples of the carbodiimide include tetramethylxylylenediisocyane-based carbodiimide, 4,4'-methylenebis(cyclohexylisocyanate)-based carbodiimide, and pentamethylenediisocyanate-based carbodiimide.

The carbodiimide is also available as a commercially available product and specifically, examples thereof include CARBODILITE V-02, CARBODILITE V-02-L2, CARBODILITE SV-02, CARBODILITE V-04, CARBODILITE V-10, CARBODILITE SW-12G, CARBODILITE E-02, CARBODILITE E-03A, and CARBODILITE E-05 (hereinabove, manufactured by Nisshinbo Chemical Inc.); Lupranate MM-103 and XTB-3003 (hereinabove, manufactured by BASF SE); and Stabaxol P (manufactured by Sumika Bayer Urethane Co., Ltd.).

The epoxy silane is not particularly limited, and an example thereof includes a silane coupling agent having an epoxy group, and preferably, a trialkoxysilane compound having an epoxy group is used.

More specifically, examples of the epoxy silane include 3-glycidoxypropyltrimethoxy silane, 3-glycidoxypropyltriethoxy silane, 3-glycidoxypropylmethyldimethoxy silane, 3-glycidoxypropylmethyldiethoxy silane, and 2-(3,4-epoxycyclohexyl)ethyltrimethoxy silane.

Further, the epoxy silane is also available as a commercially available product, and specifically, examples thereof include KBM-403 (glycidoxypropyltrimethoxy silane), KBE-403 (3-glycidoxypropyltriethoxy silane), KBM-402 (3-glycidoxypropylmethyldimethoxy silane), KBE-402 (3-glycidoxypropylmethyldiethoxy silane), and KBM-303 (2-(3,4-epoxycyclohexyl)ethyltrimethoxy silane) (hereinabove, manufactured by Shin-Etsu Chemical Co., Ltd.).

These cross-linking agents may be used alone or in combination of two or more.

As the cross-linking agent, preferably, a water-dispersible polyisocyanate and a carbodiimide are used.

A mixing ratio of the cross-linking agent is not particularly limited, and a ratio of the cross-linking agent is, for example, 1 part by mass or more, preferably 5 parts by mass or more, more preferably 10 parts by mass or more, and for example, 30 parts by mass or less, preferably 25 parts by mass or less, more preferably 20 parts by mass or less with respect to 100 parts by mass of the polyurethane resin.

The timing of addition of the additive is not particularly limited, and may be added at the time of synthesis of the polyurethane resin, may be added to the polyurethane dispersion before the addition of the thickener, may be added to the polyurethane dispersion at the same time as the thickener, and furthermore, may be added to the polyurethane dispersion after the addition of the thickener.

Further, the solid content concentration of the coating agent (the total concentration of the polyurethane resin and the thickener, and furthermore, the additive added if necessary), and the addition ratio of the thickener are adjusted so that the coating agent has relatively high viscosity (50 mPa·s or more at 25°C).

More specifically, from the viewpoint of permeation resistance with respect to paper, the viscosity at 25°C of the coating agent is 50 mPa·s or more, preferably 80 mPa·s or more, more preferably 100 mPa·s or more, further more preferably 200 mPa·s or more, still more preferably 300 mPa·s or more, furthermore preferably 400 mPa·s or more, particularly preferably 500 mPa·s or more, and from the viewpoint of coating workability and handling properties, the viscosity at 25°C of the coating agent is, for example, 2000 mPa·s or less, preferably 1800 mPa·s or less, more preferably 1600 mPa·s or less, further more preferably 1400 mPa·s or less, still more preferably 1200 mPa·s or less, furthermore preferably 1000 mPa·s or less, particularly preferably 800 mPa·s or less.

The viscosity is measured with a B-type viscometer under the measurement conditions of Examples to be described later.

Further, the solid content concentration of the coating agent is, for example, 5% by mass or more, preferably 8% by mass or more, more preferably 10% by mass or more, further more preferably 12% by mass or more, and for example, 40% by mass or less, preferably 30% by mass or less, more preferably 28% by mass or less, further more preferably 23% by mass or less.

In addition, in the coating agent, a content ratio of the thickener is 0.1% by mass or more, preferably 1.0% by mass or more, more preferably 2.0% by mass or more, further more preferably 3.0% by mass or more, still more preferably 3.5% by mass or more, particularly preferably 5.0% by mass or more, and 20% by mass or less, preferably 18% by mass or less, more preferably 16% by mass or less, further more preferably 14% by mass or less, particularly preferably 12% by mass or less with respect to the total solid content of the polyurethane resin and the thickener.

When the content ratio of the thickener is within the above-described range, it is possible to make the coating agent relatively high in viscosity, so that it is possible to apply the coating agent to a paper substrate through which moisture easily permeates to form a polyurethane layer.

When the viscosity is relatively high, it is possible to excellently apply the coating agent to the paper substrate through which moisture easily permeates, and therefore, the coating agent may not contain the thickener as long as it has the above-described viscosity (50 mPa·s or more) at 25°C. From the viewpoint of easy production, the coating agent preferably contains the thickener.

In other words, a coating agent having the above-described solid content concentration (preferably, 12 to 23% by mass), having a mixing ratio of the thickener within the above-described range (0.1 to 20% by mass), and furthermore, having the viscosity at 25°C within the above-described range (50 mPa·s or more) is particularly preferably used from the viewpoint of penetration resistance to paper, coating workability, and handling properties.

Then, since the above-described coating agent has relatively high viscosity, it is possible to be excellently applied to a paper substrate through which moisture easily permeates to form a polyurethane layer.

Therefore, when the above-described coating agent is applied to a paper substrate, it is possible to obtain a laminate having excellent gas barrier properties. Furthermore, since the above-described coating agent can be excellently applied to the paper substrate through which moisture easily permeates, the obtained laminate also has excellent appearance.

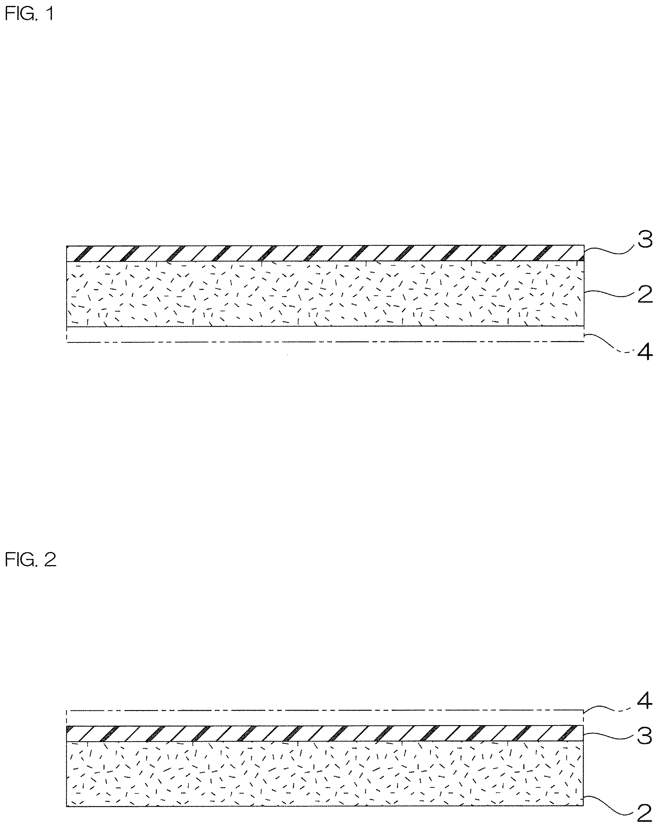

In the following, a laminate obtained by using the above-described coating agent is described in detail with reference to FIG. 1.

In FIG. 1, the laminate 1 includes the paper substrate 2, and a polyurethane layer 3 laminated on one surface of the paper substrate.

The paper substrate 2 is a substrate formed of paper, and examples thereof include paper obtained by making natural pulp or synthetic pulp, and the paper substrate 2 is appropriately selected in accordance with the purpose of use and the application.

The paper substrate 2 may be a single layer or may be a multilayer of the same kind or two or more kinds.

A shape of the paper substrate 2 is not particularly limited, and examples of the shape thereof include a sheet shape, a bottle shape, and a cup shape. Preferably, a sheet shape is used.

The paper substrate 2 may be subjected to a surface treatment (corona discharge treatment and the like), and an anchor coat or an undercoat treatment, and furthermore, a vapor deposition treatment of a metal such as aluminum and a metal oxide such as silica, alumina, and a mixture of silica and alumina.

A thickness of the paper substrate 2 is, for example, 3 µm or more, preferably 5 µm or more, and for example, 500 µm or less, preferably 200 µm or less.

Further, the basis weight of the paper substrate 2 is, for example, 20 g/m² or more, preferably 30 g/m² or more, and, for example, 400 g/m² or less, preferably 300 g/m² or less.

The polyurethane layer 3 is a gas barrier layer which imparts gas barrier properties to the laminate 1.

The polyurethane layer 3 includes the polyurethane resin and the thickener described above, and includes the above-described additive (filler and the like) if necessary. More specifically, the polyurethane layer 3 is formed as a dried product of the above-described coating agent by applying the above-described coating agent on one surface of the paper substrate 2 to be dried and being cured if necessary.

A method for applying the coating agent is not particularly limited, and examples thereof include known coating methods such as a dip coating method, a gravure coating method, a reverse coating method, a roll coating method, a bar coating method, a spray coating method, and an air knife coating method.

In addition, the drying conditions of the coating agent are not particularly limited, and a drying temperature is, for example, 40°C or more, preferably 50°C or more, and for example, 200°C or less, preferably 180°C or less. Further, the drying time is, for example, 0.1 minutes or more, preferably 0.2 minutes or more, and for example, 10 minutes or less, preferably 5 minutes or less.

The curing conditions are not particularly limited, and for example, the relative humidity is 20%RH or more, preferably 30%RH or more, and for example, 70%RH or less, preferably 60%RH or less, particularly preferably 50%RH. In addition, the temperature conditions are, for example, 10°C or more, preferably 20°C or more, and 40°C or less, preferably 30°C or less. The curing time is, for example, 0.5 days or more, preferably 1 day or more, and for example, 7 days or less, preferably 3 days or less.

Thus, the polyurethane layer 3 can be formed on one surface of the paper substrate 2.

An amount of the polyurethane layer 3 is, for example, 0.1 g/m² or more, preferably 0.2 g/m² or more, more preferably 0.6 g/m² or more, further more preferably 1.0 g/m² or more, particularly preferably 2.0 g/m² or more, and for example, 20 g/m² or less, preferably 10 g/m² or less, more preferably 8 g/m² or less, further more preferably 6 g/m² or less, particularly preferably 4 g/m² or less.

Further, the polyurethane layer 3 may be formed on at least one surface of the paper substrate 2. In other words, the polyurethane layer 3 may be formed on only one surface of the paper substrate 2, or may be formed on both one surface and the other surface of the paper substrate 2.

From the viewpoint of suppressing the mixing of the polyurethane resin in the recycling of the paper, as shown in FIG. 1, the polyurethane layer 3 is preferably formed on only one surface of the paper substrate.

Further, though not shown, from the viewpoint of improving the gas barrier properties, the polyurethane layer 3 may be, for example, subjected to a vapor deposition treatment of a metal such as aluminum, or a metal oxide such as silica, alumina, and a mixture of silica and alumina.

Further, the laminate 1 may furthermore include an ionomer layer 4 so as to impart water resistance, oil resistance, and heat sealing properties to the laminate 1.

In other words, as shown in FIG. 1, the laminate 1 may include the paper substrate 2, the polyurethane layer 3 formed on one surface of the paper substrate 2, and the ionomer layer 4 formed on the other surface of the paper substrate 2.

More specifically, in the embodiment, as shown by a phantom line of FIG. 1, the ionomer layer 4 is formed on the other surface with respect to one surface on which the polyurethane layer 3 of the paper substrate 2 is formed.

The ionomer layer 4 is a functional resin layer containing an ionomer, and is, for example, formed as a dried product of a dispersion of the ionomer.

The ionomer is an ionic polymer material. An example of the ionomer includes an olefin-based ionomer, and more specifically, an example thereof includes an ethylene-based ionomer. An example of the ethylene-based ionomer includes an ethylene-unsaturated carboxylic acid copolymer.

The ethylene-unsaturated carboxylic acid copolymer is synthesized by, for example, copolymerizing a monomer component containing an ethylene and an unsaturated carboxylic acid by a known method.

The unsaturated carboxylic acid is a monomer having at least one ethylenically unsaturated bond and a carboxy group in combination, and examples thereof include monobasic acids such as acrylic acid, methacrylic acid, and crotonic acid, and dibasic acids such as maleic acid, fumaric acid, and itaconic acid. These unsaturated carboxylic acids may be used alone or in combination of two or more.

As the unsaturated carboxylic acid, from the viewpoint of water resistance, preferably, a monobasic acid is used, more preferably, an acrylic acid and a methacrylic acid are used.

In addition, vinyl esters such as a carboxylic acid vinyl ester including vinyl acetate and vinyl propionate may be used in combination with the unsaturated carboxylic acid. In such a case, a mixing ratio of the vinyl esters is appropriately set in accordance with the purpose and the application.

In the monomer component, as a content ratio of the ethylene and the unsaturated carboxylic acid, a ratio of the ethylene is 75% by mass or more, preferably 78% by mass or more, and for example, 90% by mass or less, preferably 88% by mass or less with respect to the total amount of these. Further, a ratio of the unsaturated carboxylic acid is, for example, 10% by mass or more, preferably 12% by mass or more, and 25% by mass or less, preferably 22% by mass or less.

The copolymerization of the monomer component is not particularly limited, and a known polymerization method is used. For example, the monomer component can be polymerized by the method described in Japanese Examined Patent Application Publication No. H7-008933B, H5-039975B, H4-030970B, S42-000275B, S42-023085B, S45-029909B, S51-062890A, and the like.

Thus, a dispersion (that is, a dispersion of the ionomer) in which particles of the ethylene-unsaturated carboxylic acid copolymer are dispersed in water can be obtained.

Further, the ethylene-unsaturated carboxylic acid copolymer is neutralized if necessary.

In the neutralization, for example, a basic compound as a neutralizing agent is added to a dispersion of the ethylene-unsaturated carboxylic acid copolymer.

Examples of the basic compound include inorganic basic compounds such as sodium hydroxide and potassium hydroxide, and organic basic compounds such as amines including ammonia, triethylamine, triethanolamine, and dimethylethanolamine. These basic compounds may be used alone or in combination of two or more. An addition amount of the basic compound is appropriately set in accordance with the purpose and the application.

In addition, in the production of the ethylene-unsaturated carboxylic acid copolymer, from the viewpoint of improving production stability, a known emulsifier (surfactant) may be blended if necessary. A mixing ratio of the emulsifier is appropriately set in accordance with the purpose and the application.

In addition, in the production of the ethylene-unsaturated carboxylic acid copolymer, for example, a known additive may be blended at an appropriate ratio. Examples of the known additive include pH adjusting agents, metal ion sealing agents such as ethylenediaminetetraacetic acid and a salt thereof, and molecular weight adjusting agents (chain transfer agents) such as mercaptans and a low molecular halogen compound.

Further, the solid content concentration in the dispersion of the ethylene-unsaturated carboxylic acid copolymer is, for example, 10% by mass or more, preferably 20% by mass or more, and for example, 60% by mass or less, preferably 50% by mass or less.

The dispersion of the ethylene-unsaturated carboxylic acid copolymer can be also obtained as a commercially available product.

Examples of the commercially available product of the ethylene-unsaturated carboxylic acid copolymer include a trade name: CHEMIPEARL S120 (manufactured by Mitsui Chemicals, Inc., solid content of 27%), a trade name: CHEMIPEARL S100 (manufactured by Mitsui Chemicals, Inc., solid content of 27%), a trade name: CHEMIPEARL Sill (manufactured by Mitsui Chemicals, Inc., solid content of 27%), a trade name: CHEMIPEARL S200 (manufactured by Mitsui Chemicals, Inc., solid content of 27%), a trade name: CHEMIPEARL S300 (manufactured by Mitsui Chemicals, Inc., solid content of 35%), a trade name: CHEMIPEARL S650 (manufactured by Mitsui Chemicals, Inc., solid content of 27%), and a trade name: CHEMIPEARL S75N (manufactured by Mitsui Chemicals, Inc., solid content of 24%).

These commercially available products of the dispersion of the ethylene-unsaturated carboxylic acid copolymer may be used alone or in combination of two or more.

The dispersion of the ionomer is not limited to the dispersion of the ethylene-unsaturated carboxylic acid copolymer described above, and a dispersion of a known ionomer can be used.

In addition, the ionomer layer 4 may contain an additive, if necessary, in addition to the above-described ionomer.

Examples of the additive include known additives such as an acrylic polymer, an olefin polymer, a curing agent, a cross-linking agent, a film forming aid, a defoaming agent, an anti-sagging agent, a leveling agent, a tackifier, a hardness imparting agent, an antiseptic, a thickener, an anti-freezing agent, a dispersant, an inorganic pigment, and an organic pigment. These additives may be used alone or in combination of two or more.

A mixing ratio and the timing of the blending of the additive are appropriately set in accordance with the purpose and the application. The above-described additive is, for example, blended at an appropriate ratio with respect to the dispersion of the ionomer.

Then, in the formation of the ionomer layer 4, the dispersion of the ionomer described above is applied to the other surface of the paper substrate 2 to be dried.

An application method is not particularly limited and examples thereof include known coating methods such as a dip coating method, a gravure coating method, a reverse coating method, a roll coating method, a bar coating method, a spray coating method, and an air knife coating method.

Further, the drying conditions of the dispersion of the ionomer are not particularly limited, and are appropriately set in accordance with the purpose and the application. A drying temperature is, for example, 100 to 200°C, and the drying time is, for example, 10 seconds to 30 minutes.

Thus, the ionomer layer 4 can be formed on the other surface of the paper substrate 2.

A thickness of the ionomer layer 4 is appropriately set in accordance with the purpose and the application.

The laminate 1 thus obtained includes the paper substrate 2, the polyurethane layer 3 formed on one surface of the paper substrate 2, and the ionomer layer 4 formed on the other surface of the paper substrate 2. Therefore, the above-described laminate 1 has heat sealing properties, and also has excellent oil resistance and water resistance.

Therefore, the above-described laminate 1 is preferably used for the application in which the ionomer layer 4 is in contact with an oily or aqueous article (for example, food and the like). In such a case, if necessary, the surface of the polyurethane layer 3 of the laminate 1 can be subjected to a printing treatment to be decorated.

As shown by a phantom line of FIG. 2, the ionomer layer 4 can be also formed on one surface of the polyurethane layer 3 instead of the other surface of the paper substrate 2.

In other words, the laminate 1 may include the paper substrate 2, the polyurethane layer 3 formed on one surface of the paper substrate 2, and the ionomer layer 4 formed on one surface of the polyurethane layer 3.

In such a case, in order to obtain the laminate 1, for example, a coating agent is applied and dried on one surface of the paper substrate 2 under the above-described conditions, if necessary, curing is carried out, and then, a dispersion of an ionomer is applied and dried on one surface of the obtained polyurethane layer 3 under the above-described conditions.

Since the laminate 1 also includes the above-described ionomer layer 4, it has heat sealing properties, and also has excellent oil resistance and water resistance.

Therefore, the above-described laminate 1 is preferably used for the application in which the ionomer layer 4 is in contact with an oily or aqueous article (for example, food and the like). In such a case, since the polyurethane layer 3 and the ionomer layer 4 are laminated on one surface of the laminate 1, when the ionomer layer 4 and the oily or the aqueous article (for example, food and the like) come into contact with each other, it is possible to develop particularly excellent water resistance and oil resistance.

Although not shown, the ionomer layer 4 can be also formed on both the other surface (ref: FIG. 1) of the paper substrate 2 and one surface (ref: FIG. 2) of the polyurethane layer 3.

Then, in the above-described laminate 1, the polyurethane layer 3 having gas barrier properties is excellently laminated with respect to the paper substrate 2. Therefore, the above-described laminate 1 has excellent gas barrier properties even when the polyurethane layer 3 has one layer. Further, since the above-described coating agent can be excellently applied to the paper substrate through which moisture easily permeates, the obtained laminate 1 also has excellent appearance.

Then, since the laminate 1 thus obtained has excellent gas barrier properties even when the polyurethane layer 3 has one layer, it has excellent recyclability. Therefore, the laminate 1 is preferably used in various fields requiring the gas barrier properties, specifically, in paper substrates for food packaging, industrial paper substrates, and the like.

### Examples

Next, the present invention is described based on Examples and Comparative Examples. The present invention is however not limited by the following Examples. All designations of "part" or "parts" and "%" mean part or parts by mass and % by mass, respectively, unless otherwise particularly specified in the following description. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

### Synthetic Example 1 (PUD)

A transparent reaction liquid of an isocyanate group-terminated prepolymer was obtained by mixing 143.2 g of TAKENATE 500 (1,3-xylylene diisocyanate, m-XDI, manufactured by Mitsui Chemicals, Inc.), 25.0 g of Vestanat H₁₂MDI (4,4'-methylenebis(cyclohexyl isocyanate), H₁₂MDI), 29.2 g of ethylene glycol, 2.7 g of trimethylolpropane, 14.8 g of dimethylolpropionic acid, and 121.6 g of methyl ethyl ketone as a solvent to be reacted at 65 to 70°C under a nitrogen atmosphere until the isocyanate group concentration (NCO%) reached 6.11% by mass.

Next, the resulting reaction liquid was cooled to 40°C, followed by neutralization with 11.0 g of triethylamine.

Then, the reaction liquid was dispersed in 838.0 g of ion-exchanged water with a homodisper, and an amine aqueous solution in which 24.2 g of 2-((2-aminoethyl)amino)ethanol was dissolved in 48.4 g of ion-exchanged water was added, followed by a chain extension reaction.

Thereafter, the mixture was subjected to an aging reaction for one hour, and the methyl ethyl ketone and the ion-exchanged water were distilled off with an evaporator and adjusted with the ion-exchanged water so as to have the solid content of 30% by mass to obtain a polyurethane dispersion (PUD).

The obtained polyurethane dispersion (PUD) had an average particle size of 60 nm by measurement with Coulter Counter N5 (manufactured by Beckman Coulter, Inc.) in a pH of 8.6.

### Examples 1 to 6 and Comparative Examples 1 to 2

### (1) Coating Agent

In the formulation shown in Table 1, water, PUD (solid content concentration of 30%), a thickener (trade name: PRIMAL RM-8W, manufactured by The Dow Chemical Company, solid content concentration of 21.5%), and a swellable layered inorganic compound (trade name: NTS-5, synthetic mica, average particle size of 11 µm, manufactured by TOPY INDUSTRIES, LIMITED., solid content concentration of 6%) were blended and mixed with a mixer, and thus, a coating agent was obtained.

Then, the viscosity of the obtained coating agent at 25°C was measured under the following conditions in conformity with the description of a measurement method for the apparent viscosity with a Brookfield-type rotary viscometer.
Device: B-type viscometer (model number: RB-85), manufactured by TOKI SANGYO CO., LTD.
Rotor: No. 2
Rotation number: 60 rpm

### (2) Laminate

The above-described coating agent was applied to one surface of a coated paper (basis weight of 40 g/m²) as a paper substrate with a bar coater. Next, the coating film was dried at 110°C for three minutes and subsequently, cured under conditions of 23°C and 50%RH for two days. Thus, a polyurethane layer was formed on one surface of the paper substrate to obtain a laminate.

### <Evaluation>

### (1) Coating Amount/ Appearance

In each of the laminates obtained in Examples and Comparative Examples, the mass of the paper substrate before coating and the mass of the laminate after coating were measured, and an amount of the polyurethane layer was calculated. Further, the appearance of the polyurethane layer was observed and evaluated on the basis of the following criteria. The results are shown in Table 1.

Excellent: non-uniform portion in a coating state of below 20% of the total
Good: non-uniform portion in a coating state of 20% or more and below 50% of the total
Bad: non-uniform portion in a coating state of 50% or more of the total

### (2) Oxygen Permeability

Each of the laminates obtained in Examples and Comparative Examples was used as a substrate to obtain a laminate paper.

In other words, as an adhesive, a mixture (TAKELAC A-310/ TAKELAC A-3= 10/1 (mass ratio)) of TAKELAC A-310 (manufactured by Mitsui Chemicals, Inc.) and TAKENATE A-3 (manufactured by Mitsui Chemicals, Inc.) was applied to the surface of the laminate on which the polyurethane layer was formed with a bar coater so as to have a dry thickness of 3.0 g/m², and dried with a dryer. Next, an unstretched polypropylene film (#20) was laminated on the coated surface of the adhesive.

Also, an adhesive was applied to the surface of the laminate on which the polyurethane layer was not formed in the same manner as the description above, and dried with a dryer. Next, an unstretched polypropylene film (#20) was laminated on the coated surface of the adhesive.

Thereafter, the resulting laminate was cured at 40°C for two days. Thus, a laminate paper was obtained.

Then, the oxygen permeability of the obtained laminate paper was measured under the conditions of 20°C and relative humidity of 80% (80%RH) with an oxygen permeability measuring device (manufactured by MOCON Inc., OX-TRAN 2/20). The oxygen permeation was measured as permeation (cc/m²· day· atm) per m², day, and atmosphere. The results are shown in Table 1.

### Example 7

A dispersion of an ethylene-unsaturated carboxylic acid copolymer (trade name: CHEMIPEARL S300, manufactured by Mitsui Chemicals, Inc., solid content of 35%) was applied to the other surface of the paper substrate of the laminate of Example 1 with respect to one surface on which the polyurethane layer was formed so as to have 5 g/m² with a bar coater. Next, the coating film was dried at 120°C for one minute. Thus, the laminate in which the polyurethane layer was formed on one surface of the paper substrate, and furthermore, the ionomer layer was formed on the other surface of the paper substrate was obtained.

Thereafter, the ionomer layers of the laminates were heat-sealed under the conditions of 2 kg/cm² at 140°C for one second.

Then, the heat sealing strength was measured with a tensile device (part number: 201X) manufactured by INTESCO co., ltd. As a result, it was 490 g/15 mm.

### Example 8

A dispersion of an ethylene-unsaturated carboxylic acid copolymer (trade name: CHEMIPEARL S300, manufactured by Mitsui Chemicals, Inc., solid content of 35%) was applied to the surface of the polyurethane layer of the laminate of Example 1 so as to have 5 g/m² with a bar coater. Next, the coating film was dried at 120°C for one minute. Thus, the laminate in which the polyurethane layer was formed on one surface of the paper substrate, and furthermore, the ionomer layer was formed on the polyurethane layer was obtained.

Subsequently, the ionomer layers of the laminates were heat-sealed under the conditions of 2 kg/cm² at 140°C for one second.

Then, the heat sealing strength was measured with a tensile device (part number: 201X) manufactured by INTESCO co., ltd. As a result, it was 680 g/15 mm.

### Examples 9 to 11

A polyurethane layer was formed on a paper substrate in the same manner as in Example 1, except that the formulation was changed to that described in Table 1 to obtain a laminate. The obtained laminate was also evaluated in the same manner as in Example 1.

Thereafter, a dispersion of an ethylene-unsaturated carboxylic acid copolymer (trade name: CHEMIPEARL S300, manufactured by Mitsui Chemicals, Inc., solid content of 35%) was applied to the surface on which the polyurethane layer of the paper substrate of the laminate was formed so as to have 5 g/m² with a bar coater. Next, the coating film was dried at 120°C for one minute. Thus, the laminate in which the polyurethane layer was formed on one surface of the paper substrate, and furthermore, the ionomer layer was formed on the polyurethane layer was obtained.

Subsequently, the ionomer layers of the laminates were heat-sealed under the conditions of 2 kg/cm² at 140°C for one second.

Then, the heat sealing strength was measured with a tensile device (part number: 201X) manufactured by INTESCO co., ltd. As a result, an adhesive force was sufficient because the breakage of the paper substrate occurred. More specifically, in Example 11, the heat sealing strength was 590 g/15 mm.

### [Table 1]

**Table 1**

| No. | | Ex. 1 | Ex. 2 | Ex. 3 | Ex. 4 | Ex. 5 | Ex. 6 | Ex. 9 | Ex. 10 | Ex. 11 | Comparative Ex. 1 | Comparative Ex. 2 |
|---|---|---|---|---|---|---|---|---|---|---|---|---|
| Mixing Amount (g) | Water | 28.3 | 28.3 | 28.3 | 1.7 | 1.7 | 1.7 | 28.3 | 28.3 | 1.7 | 28.3 | 1.7 |
| | PUD (30%) | 66.7 | 66.7 | 66.7 | 26.7 | 26.7 | 26.7 | 60.0 | 60.0 | 26.7 | 66.7 | 26.7 |
| | NTS-5 (6%) | 0.0 | 0.0 | 0.0 | 66.7 | 66.7 | 66.7 | 0.0 | 0.0 | 66.7 | 0.0 | 66.7 |
| | Water-Dispersed Isocyanate (80%) | 0.0 | 0.0 | 0.0 | 0.0 | 0.0 | 0.0 | 2.5 | 0.0 | 0.0 | 0.0 | 0.0 |
| | Carbodiimide (40%) | 0.0 | 0.0 | 0.0 | 0.0 | 0.0 | 0.0 | 0.0 | 5.0 | 2.2 | 0.0 | 0.0 |
| | RM-8W (21.5%) | 5.0 | 3.0 | 1.0 | 5.0 | 3.0 | 1.0 | 3.0 | 3.0 | 3.0 | 0.0 | 0.0 |
| | Total Amout (g) | 100.0 | 98.0 | 96.0 | 100.0 | 98.0 | 96.0 | 93.8 | 96.3 | 100.3 | 95.0 | 95.0 |
| Mass Conversion | Polyurethane Resin Solid Content (g) | 20.0 | 20.0 | 20.0 | 8.0 | 8.0 | 8.0 | 18.0 | 18.0 | 8.0 | 20.0 | 8.0 |
| | Filler Solid Content (g) | 0.0 | 0.0 | 0.0 | 4.0 | 4.0 | 4.0 | 0.0 | 0.0 | 4.0 | 0.0 | 4.0 |
| | Cross-Linking Solid Content (g) | 0.0 | 0.0 | 0.0 | 0.0 | 0.0 | 0.0 | 2.0 | 2.0 | 0.9 | 0.0 | 0.0 |
| | Thickener Solid Content (g) | 1.1 | 0.6 | 0.2 | 1.1 | 0.6 | 0.2 | 0.6 | 0.6 | 0.6 | 0.0 | 0.0 |
| | Water/ Solvent (g) | 78.9 | 77.4 | 75.8 | 86.9 | 85.4 | 83.8 | 44.4 | 44.4 | 83.7 | 75.0 | 83.0 |
| | Total Amount (g) | 100.0 | 98.0 | 96.0 | 100.0 | 98.0 | 96.0 | 65.0 | 65.0 | 97.3 | 95.0 | 95.0 |
| Thickener/ Polyurethane Resin + Thickener (solid content%) | | 5.1 | 3.1 | 1.1 | 11.8 | 7.5 | 2.6 | 3.5 | 3.5 | 7.5 | 0.0 | 0.0 |
| Solid Content Concentration of Coating Agent (%) | | 21.1 | 21.1 | 21.1 | 13.1 | 12.9 | 12.7 | 21.1 | 21.3 | 12.8 | 21.1 | 12.6 |
| Viscosity of Coating Agent (mPa·s) | | 525 | 250 | 85 | 600 | 275 | 105 | 260 | 260 | 280 | 20 | 25 |
| Evaluation | Amount of Polyurethane Layer (g/cm²) | 2.6 | 2.7 | 2.4 | 1.8 | 2.1 | 2.5 | 2.7 | 2.7 | 2.1 | 2.5 | 2.3 |
| | Appearance (Visual Observation) | Excellent | Good | Good | Excellent | Excellent | Good | Good | Good | Good | Bad | Bad |
| | Oxygen Permeation (cc/m²·day·atm) | 32 | 35 | 68 | 1 | 15 | 80 | 38 | 39 | 18 | 850 | 250 |

The details of abbreviations in Table are described below.
RM-8W: thickener, PRIMAL RM-8W, manufactured by The Dow Chemical Company, solid content concentration of 21.5%
NTS-5: swellable mica sol NTS-5, average particle size of 11 µm, manufactured by TOPY INDUSTRIES, LIMITED, solid content concentration of 6%
Water-dispersible isocyanate: cross-linking agent, TAKENATE WD-726, manufactured by Mitsui Chemicals, Inc., solid content concentration of 80.0%
Carbodiimide: cross-linking agent, CARBODILITE SV-02, manufactured by Nisshinbo Chemical Inc., solid content concentration of 40.0%

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The coating agent and the laminate of the present invention are preferably used in paper substrates for food packaging, industrial paper substrates, and the like.

## Claims

1. A coating agent obtained by water-dispersing a polyurethane resin and a thickener, wherein
the polyurethane resin is a secondary reaction product of an isocyanate group-terminated prepolymer and a chain extender, the isocyanate group-terminated prepolymer being a primary reaction product of a polyisocyanate component containing a xylylene diisocyanate and/or a hydrogenated xylylene diisocyanate, and an active hydrogen group-containing component containing a short chain diol having 2 to 6 carbon atoms and an active hydrogen compound having a hydrophilic group; and
a content ratio of the thickener is 0.1% by mass or more and 20% by mass or less with respect to the total solid content of the polyurethane resin and the thickener.

2. A coating agent obtained by water-dispersing a polyurethane resin, wherein
the polyurethane resin is a secondary reaction product of an isocyanate group-terminated prepolymer and a chain extender, the isocyanate group-terminated prepolymer being a primary reaction product of a polyisocyanate component containing a xylylene diisocyanate and/or a hydrogenated xylylene diisocyanate, and an active hydrogen group-containing component containing a short chain diol having 2 to 6 carbon atoms and an active hydrogen compound having a hydrophilic group; and
the viscosity at 25°C of the coating agent is 50 mPa·s or more.

3. The coating agent according to claim 1 further comprising:
a swellable layered inorganic compound.

4. A laminate comprising:
a substrate made of paper and a polyurethane layer laminated on at least one surface of the substrate, wherein
the polyurethane layer includes a dried product of the coating agent according to claim 1.

5. The laminate according to claim 4 further comprising:
an ionomer layer.

6. The coating agent according to claim 2 further comprising:
a swellable layered inorganic compound.

7. A laminate comprising:
a substrate made of paper and a polyurethane layer laminated on at least one surface of the substrate, wherein
the polyurethane layer includes a dried product of the coating agent according to claim 2.

8. The laminate according to claim 7 further comprising:
an ionomer layer.
